(19) Europäisches Patentamt
European Patent Office
Office européen des brevets

(11) Veröffentlichungsnummer: **0 229 940**
**B1**

# (12) EUROPÄISCHE PATENTSCHRIFT

(45) Veröffentlichungstag der Patentschrift:
28.03.90

(51) Int. Cl.⁴: **F16F 1/38**, B62D 33/06

(21) Anmeldenummer: **86116588.4**

(22) Anmeldetag: **28.11.86**

(54) Elastisches Lager für die Lagerung des Fahrerhauses eines Lastkraftwagens.

(30) Priorität: 20.01.86 DE 3601506

(43) Veröffentlichungstag der Anmeldung:
29.07.87 Patentblatt 87/31

(45) Bekanntmachung des Hinweises auf die Patenterteilung:
28.03.90 Patentblatt 90/13

(84) Benannte Vertragsstaaten:
AT DE FR GB IT NL SE

(56) Entgegenhaltungen:
EP-A- 0 020 790
AT-B- 343 492
DE-A- 2 337 900
DE-A- 2 915 811
GB-A- 1 545 843
GB-A- 1 566 632
GB-A- 2 018 948

(73) Patentinhaber: Jörn GmbH, Porschestrasse 10,
D-7012 Fellbach(DE)

(72) Erfinder: Zawadzki, Bernd, Talstrasse 14,
D-7054 Korb(DE)
Erfinder: Iliev, Albert, Fangelsbachstrasse 25,
D-7000 Stuttgart(DE)

(74) Vertreter: Neubauer, Hans-Jürgen, Dipl.-Phys.,
Fauststrasse 30, D-8070 Ingolstadt(DE)

## Beschreibung

Die Erfindung betrifft ein elastisches Lager für die Lagerung des Fahrerhauses eines Lastkraftwagens nach dem Oberbegriff des Anspruchs 1.

Um den Arbeitsplatz eines Lastwagenfahrers angenehm zu gestalten und ein ermüdungsfreies Fahren zu gewährleisten, ist es erforderlich, das Fahrerhaus eines Lastkraftwagens gegenüber dem Fahrzeugrahmen elastisch zu lagern.

Bei einem bekannten Fahrerhauslager (DE-OS 2 915 811) ist ein Gummi-Metallelement in einem am Fahrzeugrahmen befestigten Gehäuse angebracht. In einem inneren Metallteil eines vertikal stehenden Schubelements erstreckt sich quer zur Fahrtrichtung ein Lagerbolzen, auf dem das Fahrerhaus gelagert ist und um den es gedreht bzw. aufgeklappt werden kann. Vertikal angeregte Fahrbahnstöße werden von den Schubelementen aufgenommen, und das Fahrzeug ist in vertikaler Richtung für den Fahrer gefedert. Kräfte, in Fahrtrichtung, die beim Bremsen oder Anfahren auftreten, werden ebenfalls in das Gummi-Metallelement in dessen Druckrichtung eingeleitet, was eine an sich gewünschte, relativ starre Führung in Fahrtrichtung bewirkt. Quer zur Fahrtrichtung ist das Gummielement auf Schub beansprucht, so daß im Vergleich zur Fahrtrichtung eine kleinere Federkonstante vorliegt.

Bei dem bekannten Lager trägt somit das Gummielement die statische Last des Fahrerhauses, und alle Fahrbahn angeregten Stöße und Beschleunigungs- und Fliehkräfte werden vom Gummielement aufgenommen. Das Gummielement ist daher insgesamt relativ starr auszuführen, wodurch von vornherein bereits eine unerwünscht feste Kupplung an den Fahrzeugrahmen und damit eine Schall- und Schwingungsübertragung erfolgt.

Eine andere Lagerkonstruktion für ein Fahrerhaus benutzt für die statische Last und auch für die Lagerung gegenüber vertikalen Stößen ein separates Federelement an den beiden Vorderseiten des Fahrerhauses. Es ist zusätzlich eine weitere Lagerung des Fahrerhauses für die Führung in Längsrichtung und auch in Querrichtung, so weit dies nicht von rückwärtigen, weiteren Lagern mit übernommen wird, erforderlich. Ein dafür verwendbares, elastisches Lager, das mit der vorliegenden Erfindung zur Verfügung gestellt werden soll, muß um seine unbelastete Mittellage in Querrichtung nur mit sehr geringen Rückstellkräften schwingen können, bevor ein Anschlag für starke Belastungen erreicht wird. Ähnlich sollen auch die Rückstellkräfte in Fahrtrichtung erst relativ klein sein und dann progressiv ansteigen. Weiter muß das Lager um seine Achse aufgrund der speziellen Anlenkung leicht und ohne Rückstellkräfte drehbar sein.

Weiter ist eine Gelenkbuchse (EP-A 20 790) bekannt, mit einem inneren, zylindrischen Metallteil zur Verbindung mit einem Lagerteil und mit einem äußeren, das innere Metallteil zumindest teilweise axial überdeckenden, zylindrischen Metallteil, das einen axialen Schlitz aufweist und das unter radialer Vorspannung bei der Montage in ein äußeres Aufnahme einpreßbar ist, wobei der Schlitz geschlossen wird. Das äußere Aufnahme ist dabei mit einem zweiten Lagerteil verbunden. Zwischen beiden Metallteilen ist festhaftend ein Gummikörper einvulkanisiert als ein, im eingepreßten Zustand geschlossener, Gummiring. Eine solche Gelenkbuchse zeigt nicht das erforderliche, stark progressive Ansteigen der Rückstellkräfte und weist auch keine geringen Rückstellkräfte in Querrichtung auf.

Um ein progressives Verhalten der Rückstellkräfte in elastischen Lagern zu erhalten, ist es allgemein bekannt, als elastische Anschläge dienende Gummiringe vorzusehen (GB-A 1 545 843 und DE-A 2 337 900). Fertigungstechnisch sind die bekannten Ausführungen aber ungünstig, insbesondere hinsichtlich der Entformung beim Vulkaniservorgang.

Aufgabe der Erfindung ist es somit, ein elastisches Lager zu schaffen, das in Querrichtung (Axialrichtung) nur eine geringe Rückstellkraft aufweist und in Fahrtrichtung (Radialrichtung) eine anfangs ebenfalls kleine Federkonstante mit anschließend progressiver Zunahme aufweist, wobei das Lager günstig zu befestigen ist.

Diese Aufgabe wird bei einem gattungsgemäßen Lager mit den kennzeichnenden Merkmalen des Anspruchs 1 gelöst.

Gemäß Anspruch 1 besteht das elastische Lager aus einem Gummi-Metallteil mit einem inneren, zylindrischen Metallteil und einem äußeren, zylindrischen Metallteil. Zwischen beiden Metallteilen ist ein erster Gummikörper einvulkanisiert. Das äußere Metallteil hat einen Längsschlitz, der bei der Montage des Gummi-Metallteils in ein Aufnahmeauge durch Aufbringen einer radialen Vorspannung geschlossen wird. Dadurch wird der erste Gummikörper zu einem ersten Gummiring geschlossen und durch die vom äußeren Metallteil radial nach außen wirkende Spannung sitzt das Gummi-Metallteil ohne weitere Maßnahmen fest im Aufnahmeauge. Das innere Metallteil ist mit dem Fahrerhaus (oder dem Fahrzeugrahmen) und das Aufnahmeauge mit dem Fahrzeugrahmen (oder Fahrerhaus) verbunden.

Die geringe Federkonstante um die Mittellage des Lagers in axialer und radialer Richtung wird durch den relativ wenig stark dimensionierten, ersten Gummiring erreicht. Das Lager hat dadurch die gewünschten, sehr geringen Rückstellkräfte in der Fahrzeugquerrichtung (Axialrichtung des Lagers) und das Lager kann auch um seine Achse mit relativ geringen Rückstellkräften verdreht werden.

Zur Erzielung der progressiven Zunahme der Federkonstante in Radialrichtung ist ein zum ersten Gummiring axial versetzt angeordneter zweiter Gummiring vorgesehen, der nur mit dem inneren Metallteil verbunden ist. Zweckmäßig wird dieser zweite Gummiring auf das innere Metallteil aufvulkanisiert. Da der erste und zweite Gummiring stirnseitig keine Verbindung haben dürfen und getrennt sind, ist es erforderlich, in der Vulkanisierform einen entsprechenden Steg vorzusehen. Eine fertigungstechnisch günstige Ausführung wird dadurch erzielt, daß das äußere, zylindrische Metallteil am ersten Gummiring endet und den zweiten Gummiring nicht mehr überdeckt, wodurch eine einfache Entformbarkeit sichergestellt wird.

Dieser zweite Gummiring ist in seiner Stärke so bemessen, daß im eingepreßten Zustand gegenüber dem Aufnahmeauge ein umlaufender Luftspalt verbleibt. Wenn der radiale Federweg im Bereich des Luftspaltes liegt, wirkt somit nur der erste Gummiring als Federelement. Erst bei einem radialen Einfederweg, der größer als der Luftspalt ist, wirkt zusätzlich der zweite Gummiring als Anschlag bzw. als zusätzliche Gummifeder. Dadurch steigt nach Überwinden des Luftspaltweges die Federkonstante in der gewünschten Weise stark progressiv an. Der zweite Gummiring dient somit zum einen als zusätzliche Feder als auch als Anschlag und Wegbegrenzer in Verbindung mit einem Schutz gegen Zerstörung des ersten schwach dimensionierten Gummirings.

Für eine variable Dimensionierung der Federkonstanten beider Gummiringe bei relativ geringer Lagergröße kann es je nach Anwendungsfall gemäß Anspruch 2 zweckmäßig sein, Metallbleche im ersten, aber insbesondere im zweiten Gummiring mit einzuvulkanisieren, wodurch größere Federkonstanten erreicht werden.

Für eine gute Funktion des Lagers ist es zweckmäßig, die mit Anspruch 3 angegebene Bemessungsvorschrift einzuhalten, bei der die Federkonstante des zweiten Gummirings zumindest gleich oder größer als die Federkonstante des ersten Gummirings ist.

In Anspruch 4 wird eine detailliertere Bemessungsvorschrift angegeben, die zu einer guten Dauerhaltbarkeit des Lagers und insbesondere des ersten Gummirings führt, wobei der radiale Einfederweg des ersten Gummirings auf etwa die Hälfte seiner radialen Stärke durch eine entsprechende Dimensionierung des zweiten Gummirings bei einer maximalen Einfederkraft begrenzt ist.

Die im Anspruch 4 angegebene Formel wurde mit Hilfe eines linearen Modelles ermittelt, in dem eine erste Feder auf die Hälfte ihres Federwegs komprimiert wird und eine zweite, parallel geschaltete Feder erst nach Durchlaufen eines Luftspalts wirksam wird und auf die gleiche Höhe komprimiert wird, so wie dies mit dem erfindungsgemäßen Gummi-Metallelement erfolgt. Bei der dargestellten Modellanordnung ist die Federkonstante über den Federweg bei der betrachteten Auslenkung gleich groß; bei der erfindungsgemäßen Anordnung handelt es sich jedoch um ringförmige Federn, die radial belastet werden, wodurch keine konstanten Werte für eine Federkonstante über den betrachteten Einfederungsweg vorliegen, Die angegebene Bemessungsvorschrift (Formel) ist somit nur als näherungsweise Lösung der wörtlich angegebenen Bedingung anzusehen, die größenordnungsmäßig das Verhältnis zwischen dem Luftspalt und den (sich über den Weg ändernden) Federkonstanten $c_1$ und $c_2$ angibt, Die Formel stimmt dagegen, wenn unter $c_1$ und $c_2$ als über den Einfederweg gegebenenfalls über Integralrechnung gemittelte Federkonstanten $c_1$ und $c_2$ betrachtet werden.

Mit den Merkmalen des Anspruchs 5 wird eine zweckmäßige Ausbildung eines Anschlags für die Querbewegung angegeben. Dabei soll das innere Metallteil länger als das äußere Metallteil sein und die damit verbundenen Halterungen für das Fahrerhaus radial abstehen. Das kürzere, äußere Metallteil kann sich dann in bezug auf diese Halterungen um eine Mittellage bewegen. Bei größeren Auslenkungen legt sich das äußere Metallteil an die Halterungen an, wodurch ein Anschlag geschaffen ist. Ein Anschlag kann jedoch auch durch andere Maßnahmen geschaffen sein, wobei zu berücksichtigen ist, daß eine axiale Relativbewegung der beiden Metallteile möglich sein muß, der Anschlag aber bereits wirkt, bevor der erste Gummiring zu stark belastet ist.

Gemäß Anspruch 6 wird ein Anschlag vorteilhaft so gebildet, daß das äußere Metallteil zumindest an einer Stirnseite aufgebogen ist und axial nach außen mit Gummi zur Bildung eines Anschlagpuffers versehen ist. So ein Puffer kann dabei als ganzer, umlaufender Rand ausgeführt sein. Falls aber die Gegenanschlagseite nicht am gesamten Umfang vorliegt, ist es zweckmäßig, den Pufferrand nur über einen bestimmten Kreisbereich vorzusehen.

Da das äußere Metallteil bei der Montage vorgespannt wird, das heißt sein Durchmesser verkleinert wird, ist es gemäß Anspruch 7 vorteilhaft, den radial aufgebogenen Rand mit Schlitzen zu versehen, so daß nur radial abstehende Zacken vorstehen. Damit wird ein Knicken des Rohres oder Überdehnen des Gummis beim Vorspannen vermieden. Die Form der Zacken soll sich nach außen hin verjüngen, so daß auch Spannungen im Gummi nach außen hin abgebaut werden.

Zur Vermeidung von Korrosion an den Metallteilen ist es zweckmäßig, diese womöglich mit einer dünnen Gummischicht gemäß Anspruch 8 abzudecken. Eine dünne Gummischicht an der Außenseite des äußeren Metallteils erhöht zusätzlich die Reibungshaftung gegenüber dem Aufnahmeauge und dient auch vorteilhaft zum Ausgleich von Fertigungstoleranzen.

Mit Anspruch 9 wird angegeben, wie eine feste Halterung des Gummi-Metallteils im Aufnahmeauge erzeugt wird. Vor dem Einpressen des Gummi-Metallteils ist dieses im Durchmesser weiter als das Aufnahmeauge. Durch das Einpressen wird der erste Gummiring bereits radial zusammengedrückt, so daß der von diesem ausgehende Druck nach außen für die Halterung verwendet wird. Weiter sollen jedoch die längs verlaufenden Schlitzränder des äußeren Metallteils, das zweckmäßig eine gerollte Blechbuchse ist, aufeinanderstoßen, wobei das äußere Metallteil nicht nach innen einknicken darf. Damit wird auch über die Metallbuchse eine Spannung nach außen aufgebaut. Gemäß Anspruch 10 kann das äußere Metallteil eine Federstahlbuchse sein, wobei die Federkraft nach dem Einbau im Aufnahmeauge nach außen für einen zusätzlich festen Halt sorgt.

Anhand einer Zeichnung wird ein Ausführungsbeispiel der Erfindung mit weiteren Einzelheiten, Merkmalen und Vorteilen näher erläutert.

Es zeigen

Fig. 1 einen Axialschnitt durch ein Gummi-Metallelement im nicht eingebauten Zustand,

Fig. 2 eine Seitenansicht des Gummi-Metallteils gemäß Fig. 1,

Fig. 3 einen Axialschnitt durch ein elastisches Lager mit eingebautem Gummi-Metallelement nach Fig. 1,

Fig. 4 eine Seitenansicht des Lagers nach Fig. 3.

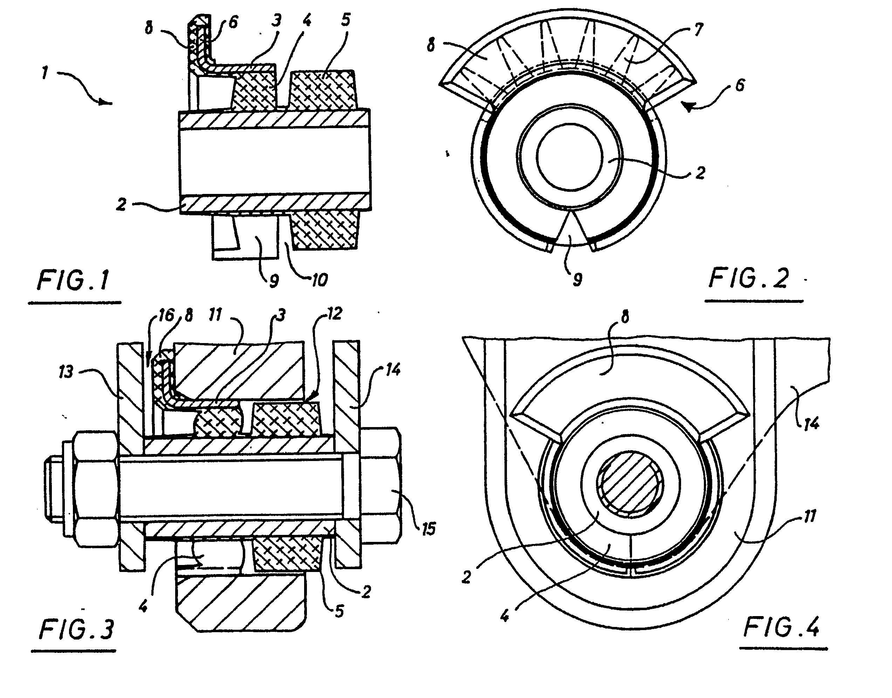

In Fig. 1 ist ein Gummi-Metallteil 1 dargestellt, das aus einem inneren, zylindrischen Metallteil 2, einem äußeren, zylindrischen Metallteil 3 und einem dazwischen festhaftend einvulkanisierten Gummikörper 4 sowie einem axial davon getrennten und auf das Metallteil 2 aufvulkanisierten Gummiring 5 besteht. Das innere Metallteil 2 ist eine starkwandige Buchse. Das äußere Metallteil 3 ist eine Blechbuchse, die an ihrer linken Stirnseite über einen Winkelbereich von ca. 120° (siehe Fig. 2) radial zu einem Rand 6 aufgebogen ist. Der Rand ist geschlitzt, so daß sich Zacken 7 (in Fig. 2 gestrichelt dargestellt) ergeben. Diese Zacken 7 bzw. der Rand 6 ist zur linken Stirnseite hin mit einem relativ dicken Gummipolster 8 überzogen. Das innere Metallteil 2 steht gegenüber dem äußeren Metallteil 3 bzw. dem Gummipolster 8 an der linken Stirnseite vor.

Während der Gummiring 5 als geschlossener Gummikörper auf das innere Metallteil 2 aufvulkanisiert ist, enthält der Gummiring 4 (im nicht zusammengepreßten Zustand) einen keilförmigen, sich nach außen öffnenden Spalt 9. Nur den Gummiring 4 ist vom zylindrischen Teil des äußeren Metallteils 3 überdeckt. Die Gummiringe 4 und 5 haben stirnseitig keine Verbindung, sondern sind durch einen Spalt 10 getrennt.

Das anhand der Fig. 1 und 2 beschriebene Gummi-Metallteil 1 wird bei der Montage in ein Aufnahmeauge 11 mit zylindrischem Innendurchmesser eingepreßt, wie in den Fig. 3 und 4 dargestellt. Der Innendurchmesser des Aufnahmeauges ist dabei kleiner als der Durchmesser des Gummi-Metallteils im unbelasteten Zustand (Fig. 1 und 2) und so gewählt, daß der keilförmige Längsspalt 9 im eingepreßten Zustand geschlossen ist. Dabei wird der erste Gummiring 4 etwas zusammengepreßt und in seiner Stärke etwas reduziert. Zwischen dem zweiten Gummiring 5 und der umgebenden Aufnahmeauge-Innenfläche verbleibt ein Luftspalt 12.

Am inneren Metallteil 2 ist links und rechts, radial abstehend, je eine Halterung 13, 14 für ein (nicht dargestelltes) Fahrerhauses mit Hilfe einer Schraubverbindung 15 angeschraubt. Fig. 4 zeigt eine Seitenansicht des Lagers, bei der die Schraubverbindung 15 und die Halterung 13 weggelassen wurden.

Aus Fig. 3 ist zu erkennen, daß der Gummipolster 8 und die Halterung 13 einen Anschlag bilden, der nach einem Auslenkungsweg entsprechend dem Spalt 16 zur Anlage kommt. Auf der anderen Seite, zur Halterung 14 hin, ist kein Anschlag vorgesehen, da auf der anderen Seite des Fahrerhauses ebenfalls ein Lager mit einseitigem Anschlag liegt, so daß pro Lager nur jeweils ein Anschlag erforderlich ist. In Fig. 4 ist strichliert die Form der Halterung 14 in der Seitenansicht zu erkennen, wobei der Rand 6 bzw. der Gummianschlag 8 im Bereich der Halterung 13 liegt.

Das vorbeschriebene Lager hat folgende Funktion:

Bei kleinen Bewegungen des Fahrerhauses bzw. der Halterungen 13, 14 in Axialrichtung im Bereich der Spaltbreite 16 wird der erste Gummiring 4 seitlich auf Schub belastet und die Bewegung erfolgt wegen der relativ geringen Federkonstante des Gummirings 4 mit nur relativ geringer Rückstellkraft. Bei einer weiteren axialen Auslenkung kommt der Anschlag 8 zur Wirkung, wodurch die Federkonstante in dieser Richtung steil ansteigt. Dies geschieht einerseits zur Begrenzung der seitlichen Auswanderung des Fahrerhauses und andererseits zum Schutze des relativ schmalen Gummirings 4 vor Überlastung.

Eine Verdrehung des Aufnahmeauges 11 gegenüber dem Fahrerhaus wird ebenfalls mit geringer Rückstellkraft durchgeführt, wobei die Verdrehbewegung ebenfalls vom Gummiring 4 aufgenommen wird.

Bei einer Bewegung des Fahrerhauses in radialer Richtung, insbesondere bei der Beschleunigung und Verzögerung des Fahrzeugs, wird im Bereich des Luftspaltes 12 der erste Gummiring 4 belastet und die federnde Lagerung davon übernommen. Bei einer radialen Einfederung größer als der Luftspalt 12 kommt das Aufnahmeauge 11 am zweiten Gummiring 5 zur Anlage, wobei dieser als nachgiebiger Anschlag wirkt, so daß bei einer weiteren radialen Auslenkung des Fahrerhauses die Federkonstante in dieser Richtung steil ansteigt.

Um eine relativ große Federkonstante des zweiten Gummirings 5 zu erhalten, können, wie weiter oben ausgeführt, Zwischenbleche einvulkanisiert werden. Als andere Maßnahme dazu ist es auch möglich, am inneren zylindrischen Metallteil 2 im Bereich und etwa der Breite des Gummirings 5 einen umlaufenden metallischen Steg vorzusehen, so daß die Gummistärke des Gummirings 5 (im Vergleich zum ersten Gummiring 4) geringer wird.

Der achsiale Anschlag in der vorbeschriebenen Ausführungsform ist durch den aufgebogenen Rand 6 und den Gummipolster 8 geschaffen. Dieser Anschlag erstreckt sich über einen Winkelbereich von ca. 120°, da die Halterungen 13, 14 nur in diesem Bereich als Gegenanschläge zur Verfügung stehen (siehe Fig. 4). Wenn die Halterungen 13, 14 breiter rund um das Lager ausgeführt sind, ist es zweckmäßig, auch den Anschlag bzw. den Rand 6 und den Gummipolster 8 auf einen Winkel von 360° rund um das Lager vorzusehen.

Zudem ist ohne weiteres ersichtlich, daß axiale Anschläge genauso gut an den Halterungen 13, 14, zum Beispiel durch umlaufende Gummiringe, angebracht sein können und dann Anschläge 6, 8 am Gummi-Metallteil 1 entfallen können.

Zusammenfassend wird festgestellt, daß mit der Erfindung ein elastisches Lager geschaffen wurde, mit geringen Rückstellkräften um eine Mittellage und steil ansteigenden Federkonstanten bei weiteren Auslenkungen in radialer oder axialer Richtung.

**Patentansprüche**

1. Elastisches Lager für die Lagerung des Fahrerhauses eines Lastkraftwagens, bestehend aus einem Gummi-Metallteil, mit einem inneren, zylindrischen Metallteil (2), mit dem das Fahrerhaus verbunden ist, mit einem äußeren, das innere Metallteil zumindest teilweise axial überdeckenden, zylindrischen Metallteil (3), das einen axialen Schlitz (9) aufweist und das unter radialer Vorspannung bei der Montage in ein äußeres Aufnahmeauge (11), das mit dem Fahrzeugrahmen verbunden ist, einpreßbar ist, wobei der Schlitz (9) geschlossen wird und mit einem zwischen beiden Metallteilen festhaftend einvulkanisierten Gummikörper als im eingepreßten Zustand geschlossenen, in einer Radialebene liegenden Gummiring (4), dadurch gekennzeichnet, daß axial versetzt ein zweiter Gummiring (5) in einer zweiten Radialebene vorgesehen ist, der nur mit dem inneren Metallteil verbunden ist, daß das äußere zylindrische Metallteil (3) am ersten Gummiring (4) endet und der zweite Gummiring (5) nicht mehr vom äußeren Metallteil (3) überdeckt ist und daß der zweite Gummiring so bemessen ist, daß im eingepreßten Zustand gegenüber dem Aufnahmeauge ein umlaufender Luftspalt (12) verbleibt, so daß der zweite Gummiring (5) bei einem Einfederweg größer als der Luftspalt (12) als zusätzlich zum ersten Gummiring (4) wirkender Anschlag bzw. als zusätzlich wirkende Gummifeder verwendet ist.

2. Elastisches Lager nach Anspruch 1, dadurch gekennzeichnet, daß Metallbleche im ersten und/oder im zweiten Gummiring (4, 5) mit einvulkanisiert sind.

3. Elastisches Lager nach Anspruch 1 oder 2, dadurch gekennzeichnet, daß die Federkonstante des zweiten Gummirings (5) zumindest gleich oder größer als die Federkonstante des ersten Gummirings (4) ist.

4. Elastisches Lager nach Anspruch 1 oder 2, dadurch gekennzeichnet, daß bei einer vorgegebenen maximalen (radialen) Einfederkraft ($P_{max}$) und einer vorgegebenen Stärke (h) des ersten Gummirings (4) im eingebauten Zustand folgende Beziehung für die Luftspaltbreite (x bzw. 12) und die Federkonstante $c_1$ des ersten Gummirings (4) und $c_2$ des zweiten Gummirings (5) am Ort des halben Federweges (h/2) erfüllt sind:

$$c_2 = \frac{2\ P_{max} - c_1 \cdot h}{h - 2x},$$

so daß der radiale Einfederweg des ersten Gummirings auf etwa die Hälfte seiner radialen Stärke (h) bei maximaler Einfederkraft begrenzt ist.

5. Elastisches Lager nach einem der Ansprüche 1 bis 4, dadurch gekennzeichnet, daß das innere Metallteil (2) vorzugsweise beidseitig axial länger als das äußere Metallteil (3) ist und an der oder den Stirnseiten des inneren Metallteils (2) wenigstens eine radial abstehende Halterung (13, 14) für das Fahrerhaus befestigt ist und das äußere Metallteil (3) axial beweglich ist, wobei die Halterung (13) als Anschlag für das äußere Metallteil (3) dient.

6. Elastisches Lager nach Anspruch 5, dadurch gekennzeichnet, daß das äußere Metallteil (3) an wenigstens einer Stirnseite in Radialrichtung nach außen zumindest über einen Teil seines Umfangs zu einem Rand (6) aufgebogen und axial nach außen mit Gummi (8) zur Bildung eines Anschlagpuffers versehen ist,

7. Elastisches Lager nach Anspruch 6, dadurch gekennzeichnet, daß der Rand (6) geschlitzt (Zacken 7) ist.

8. Elastisches Lager nach einem der Ansprüche 1 bis 7, dadurch gekennzeichnet, daß das äußere Metallteil (3) an seiner Außenseite mit einer dünnen Gummischicht versehen ist.

9. Elastisches Lager nach einem der Ansprüche 1 bis 8, dadurch gekennzeichnet, daß das äußere Metallteil (3) eine gerollte Blechbuchse ist, bei der beim Einpressen in das Aufnahmeauge (11) die Schlitzränder des Längsspaltes (9) aneinanderliegen und die so stark dimensioniert ist, daß sie den radialen Druck aushält und nicht einknickt.

10. Elastisches Lager nach einem der Ansprüche 1 bis 9, dadurch gekennzeichnet, daß das äußere Metallteil (3) aus Federstahl gefertigt ist.

**Claims**

1. A flexible support mounting for the cab of a lorry, consisting of a rubber/metal component with an inner cylindrical metal component (2) whereto the cab is connected, with an outer cylindrical metal component (3) axially covering the inner metal component at least partly, having an axial slot (9) and which can be force-fitted with radial prestressing during assembly into an outer receiving opening (11) connected to the vehicle frame, the slot (9) being closed therewith and with a rubber body firmly bonded-in between both metal components by vulcanization, being in its pressed-in state a closed rubber ring (4) lying in a radial plane, characterized in that, provision is made in an off-set position in a second radial plane for a second rubber ring (5) connected only to the inner metal component, in that the outer cylindrical metal component (3) ends at the first rubber ring (4) and that the second rubber ring (5) is no longer covered by the metal component (3), and in that the second rubber ring is dimensioned in such a way that in its pressed-in state, there remains a peripheral air gap (12) opposite the receiving opening, so that, during a spring deflection exceeding the air gap (12), the second rubber ring (5) is used as a stop acting additionally to the first rubber ring (4) or as a rubber spring operating additionally.

2. An elastic support mounting according to claim 1, characterized in that sheet-metal strips are inserted in the first and/or in the second rubber ring (4, 5) by vulcanization.

3. An elastic support mounting according to claim 1 or 2, characterized in that the spring constant of the second rubber ring (5) is at least equal to, or greater than the spring constant of the first rubber ring (4).

4. An elastic support mounting according to claim 1 or 2, characterized in that with a specified maximum (radial) elastic force ($P_{max}$) and a specified thickness (h) of the first rubber ring (4) in its installed state, the following relation is fulfilled for the air gap (x or 12) and for the spring constant $C_1$, of the first rubber ring (4) and $C_2$ of the second rubber ring (5) at the mid-way point of the spring deflection (h/2):

$$c_2 = \frac{2\ P_{max} - c_1\ .\ h}{h - 2x},$$

so that the radial spring deflection of the first rubber ring is limited to approximately half its radial thickness (h) with a maximum elastic force.

5. An elastic support mounting according to one of claims 1 to 4, characterized in that the inner metal component (2) is preferably axially longer on both sides than the outer metal component (3), and that on the front faces of the inner metal component (2), there is fastened at least one radially projecting mounting (13, 14) for the cab, and that the outer metal component (3) is axially displaceable, the mounting (13) serving as a stop for the outer metal component (3).

6. An elastic support mounting according to claim 5, characterized in that the outer metal component (3) is, at least one front side, bent up radially outward over at least a part of its periphery to form a flange (6) and that it is axially provided with rubber (8) towards the outside to form a bumper.

7. An elastic support mounting according to claim 6, characterized in that the flange (6) is slotted (prongs 7).

8. An elastic support mounting according to one of claims 1 to 7, characterized in that the outer metal component (3) is provided on its outside with a thin rubber layer.

9. An elastic support mounting according to one of claims 1 to 8, characterized in that the outer metal component (3) is a rolled sheet metal bush wherein the slotted edges of the longitudinal gap (9) are adjacent to each other, and which is dimensioned with a sufficient thickness to enable it to withstand the radial pressure and to prevent it from buckling.

10. An elastic support mounting according to one of claims 1 to 9, characterized in that the outer metal component (3) is made of spring steel.

## Revendications

1. Support élastique pour le montage et la suspension de la cabine d'un camion, constituée par une pièce en métal-caoutchouc avec un élément cylindrique intérieur métallique (2), auquel est raccordée la cabine, avec un élément cylindrique extérieur métallique (3) qui couvre au moins partiellement en direction axiale l'élément intérieur métallique, présente une fente axiale (9) et peut être inséré sous pré-tension radiale lors du montage dans un œil de logement extérieur (11) qui est raccordé au châssis du véhicule, la fente (9) étant ainsi fermée, et avec un corps en caoutchouc sous forme d'anneau en caoutchouc (4) situé dans un plan radial, fermé à l'état inséré et fixé par adhérence par vulcanisation entre les deux éléments métalliques, caractérisé en ce qu'il est prévu, en position décalée axialement dans un second plan radial, un second anneau en caoutchouc (5) qui n'est uni qu'à l'élément intérieur métallique, en ce que l'élément cylindrique extérieur métallique (3) se termine au niveau du premier anneau en caoutchouc (4) et le second anneau en caoutchouc (3) n'est plus recouvert par l'élément extérieur métallique (3), et en ce que le second anneau en caoutchouc (5) est dimensionné de telle manière qu'à l'état inséré, il subsiste une fente circonférentielle (12) par rapport à l'œil de logement, de telle sorte que lorsque le déplacement de compression élastique est supérieur à la fente (12), le second anneau en caoutchouc (5) soit utilisé comme butée agissant en plus du premier anneau en caoutchouc (4) ou comme ressort en caoutchouc agissant en complément.

2. Support élastique selon la revendication 1, caractérisé en ce que des tôles métalliques sont incorporées par vulcanisation dans le premier et/ou le second anneau en caoutchouc (4, 5).

3. Support élastique selon la revendication 1 ou 2, caractérisé en ce que la constante de rappel du second anneau en caoutchouc (5) est égale ou supérieure à la constante de rappel du premier anneau en caoutchouc (4).

4. Support élastique selon la revendication 1 ou 2, caractérisé en ce qu'à l'état inséré, avec une force de compression élastique (radiale) maximale prédéfinie ($P_{max}$) de la suspension et avec une épaisseur prédéfinie (h) du premier anneau en caoutchouc (4), la relation suivante est satisfaite pour la largeur de la fente (x ou 12) et pour les constantes de rappel $C_1$ du premier anneau en caoutchouc (4) et $C_2$ du second anneau en caoutchouc (5) à l'endroit du demi-déplacement élastique (h/2)

$$c_2 = \frac{2\ P_{max} - c_1\ .\ h}{h - 2x},$$

d'ou il résulte que le déplacement radial de compression élastique du premier anneau en caoutchouc est limité à peu près à la moitié de son épaisseur radiale (h) en cas de forme de compression élastique maximale.

5. Support élastique selon l'une quelconque des revendications 1 à 4, caractérisé en ce que l'élément intérieur métallique (2) est plus long axialement, de préférence des deux côtés, que l'élément extérieur métallique (3), en ce qu'il est fixé, sur le ou les côtés frontaux de l'élément intérieur métallique (2), au moins une attache dirigée radialement (13, 14) pour la cabine, et en ce que l'élément extérieur métallique (3) est mobile axialement, l'attache (13) servant de butée pour l'élément extérieur métallique (3).

6. Support élastique selon la revendication 5, caractérisé en ce qu'au niveau de l'un au moins de ses côtés frontaux, l'élément extérieur métallique (3) est rabattu vers l'extérieur en direction radiale sur une partie au moins de sa circonférence pour former un bord (6), et en ce qu'il est garni extérieurement en direction axiale de caoutchouc (8) pour la formation d'un tampon de butée.

7. Support élastique selon la revendication 6, caractérisé en ce que le bord (6) est entaillé (dents 7).

8. Support élastique selon l'une quelconque des revendications 1 à 7, caractérisé en ce que l'élément extérieur métallique (3) est garni d'une couche mince de caoutchouc sur son côté extérieur.

9. Support élastique selon l'une quelconque des revendications 1 à 8, caractérisé en ce que l'élément extérieur métallique (3) est une douille en tôle enroulée, avec une fente longitudinale (9) dont les bords entaillés s'appliquent l'un contre l'autre lors de l'insertion dans l'œil de logement (11), douille qui est assez fortement dimensionnée pour qu'elle résiste à la pression radiale et qu'elle ne s'infléchisse pas par compression.

10. Support élastique selon l'une quelqonque des revendications 1 à 9, caractérisé en ce que l'élément extérieur métallique (3) est fabriqué en acier à ressorts.

FIG.2

FIG.4

FIG.1

FIG.3